# EUROPÄISCHE PATENTANMELDUNG

(11) **EP 3 825 355 A1**
(43) Veröffentlichungstag der Anmeldung: **26.05.2021**
(21) Anmeldenummer: 19211024.5
(22) Anmeldetag: 22.11.2019
(51) Int. Cl.: C08K 7/16

(54) **FORMULIERUNGEN MIT HOHEN GLASÜBERGANGSTEMPERATUREN FÜR LAMINATE**

(71) Anmelder: Henkel AG & Co. KGaA, 40589 Düsseldorf (DE)
(72) Erfinder: Markou, Konstantinos, 50739 Köln (DE); Benomar, Mustapha, 47137 Duisburg (DE); Zhao, Ligang, 40593 Düsseldorf (DE); Kinzelmann, Hans-Georg, 50259 Pulheim (DE)

(57) **Zusammenfassung**

Die vorliegende Erfindung betrifft härtbare Harzzusammensetzungen, Verfahren zur Herstellung gehärteter Zusammensetzung unter Verwendung jener härtbaren Harzzusammensetzungen, sowie mittels solcher Verfahren hergestellte Artikel, insbesondere Formteile.

## Beschreibung

Die vorliegende Erfindung betrifft härtbare Harzzusammensetzungen, Verfahren zur Herstellung gehärteter Zusammensetzung unter Verwendung jener härtbaren Harzzusammensetzungen, sowie mittels solcher Verfahren hergestellte Artikel, insbesondere Formteile.

Die Leichtbauweise von Automobilen nimmt einen immer größer werdenden Stellenwert in der Automobilindustrie ein, wobei insbesondere Formteile aus karbonfaserverstärktem Kunststoff (CFRP) von der Automobilindustrie verstärkt nachgefragt werden. Derartige Formteile werden beispielsweise in Form von Felgen verbaut, welche bei Bremsvorgängen hohen Temperaturen ausgesetzt sind. Folglich ist es unabdingbar, bei der Herstellung entsprechender Formteile Matrixharze zu verwenden, welche im gehärteten Zustand sehr hohe Glasübergangstemperaturen T_{g} aufweisen, da andernfalls ein hitzeabweisender Schutzlack aufgetragen werden müsste, wodurch sich der Herstellungsprozess noch aufwendiger gestalten würde. Neben einer möglichst hohen Glasübergangstemperatur ist ebenso wichtig, das System mit einer guten Schlagzähigkeit auszustatten, um Mikrorisse zu vermeiden, weclhe das Entweichen von Luft zur Folge hätten. Allerdings handelt es sich bei hohen Glasübergangstemperaturen und guter Schlagzähigkeit um konträre Eigenschaften. So ist zwar bekannt, dass cycloaliphatische Epoxidharze, welche mit Anhydriden gehärtet werden, gehärtete Materialien mit hohen Glasübergangstemperaturen ergeben, allerdings erniedrigen viele Rohstoffe, die die Schlagzähigkeit erhöhen, wie beispielsweise Weichmacher, die Glasübergangstemperaturen derartiger Matrixsysteme.

Die vorliegende Erfindung basiert auf der Erkenntnis der Erfinder, dass durch den Zusatz von organischen Kern-Schale-Partikeln und anorganischen Partikeln Epoxidharz-basierte härtbare Formulierungen erhalten werden können, welche im gehärteten Zustand sowohl eine hohe Glasübergangstemperatur als auch eine hervorragende Schlagzähigkeit aufweisen.

Die so erhältlichen Kunststoffe zeigen somit vorteilhafte mechanische Eigenschaften und sind deshalb für den Einsatz im Automobilbau, insbesondere in Form von faserverstärkten Kunststoffformteilen, besonders geeignet.

Die vorliegende Erfindung betrifft daher in einem ersten Aspekt eine Harzzusammensetzung umfassend mindestens eine Epoxidharz-Komponente und mindestens eine Härter-Komponente, dadurch gekennzeichnet, dass die Harzzusammensetzung, bezogen auf deren Gesamtgewicht,
(A) 1-30 Gew.-% Partikel mit Kern-Schale-Struktur und
(B) 1-10 Gew.-% anorganische Partikel enthält.

Einen weiteren Aspekt der vorliegenden Erfindung stellt ein Verfahren zur Herstellung einer gehärteten Zusammensetzung, umfassend die Schritte des
(1) Bereitstellens einer Harzzusammensetzung, wie hierin beschrieben; und
(2) Härtens der Harzzusammensetzung, um eine gehärtete Zusammensetzung zu erhalten.

Die vorliegende Erfindung betrifft in einem weiteren Aspekt eine gehärtete Zusammensetzung erhältlich nach einem wie hierin beschriebenen Verfahren.

"Mindestens ein", wie hierin verwendet, bezieht sich auf 1 oder mehr, beispielsweise 1, 2, 3, 4, 5, 6, 7, 8, 9 oder mehr. Im Zusammenhang mit Bestandteilen der hierin beschriebenen KatalysatorZusammensetzungen bezieht sich diese Angabe nicht auf die absolute Menge an Molekülen, sondern auf die Art des Bestandteils. "Mindestens ein Epoxid" bedeutet daher beispielsweise ein oder mehrere verschiedene Epoxide, d.h. eine oder mehrere verschiedene Arten von Epoxiden. Zusammen mit Mengenangaben beziehen sich die Mengenangaben auf die Gesamtmenge der entsprechend bezeichneten Art von Bestandteil, wie bereits oben definiert.

Die Viskosität der hierin beschriebenen flüssigen Zusammensetzung ist insbesondere niedrig genug, damit die Zusammensetzung pumpbar ist und beispielsweise Fasermaterialien, wie sie für faserverstärkte Kunststoffteile verwendet werden, benetzen und imprägnieren zu können. In verschiedenen Ausführungsformen hat das Reaktionsgemisch bei einer Temperatur von 100°C eine Viskosität von <100 mPas. Zur Bestimmung der Viskosität wird die Harzmischung bei Raumtemperatur mit einem geeigneten Mischer hergestellt und auf einem Platte/Platte Rheometer mit 25 mm Durchmesser, einem Spalt von 0,05 mm und einer Scherrate von 100s in Rotation die Viskosität bei steigender Temperatur mit einer Heizrate von 6 K/min bestimmt.

Die vorliegende Erfindung betrifft Harzzusammensetzungen umfassend mindestens eine Epoxidharz-Komponente und mindestens eine Härter-Komponente, welche des Weiteren dadurch gekennzeichnet ist, dass ferner organische Partikel mit Kern-Schale-Struktur und anorganische Partikel enthalten sind.

Bei den organischen Partikeln mit Kern-Schale-Struktur handelt es sich bevorzugt um Kautschukpartikel. Die Kautschukpartikel mit Kern-Schale Struktur können alle für den hierin beschriebenen Zweck bekannten und geeigneten partikulären Materialien mit einem Kautschukkern sein. Der Kautschukkern hat vorzugsweise eine Glasübergangstemperatur T_{g} von unter -25°C, bevorzugter weniger als -50°C und noch bevorzugter weniger als -70°C. Die T_{g} des Kerns kann sogar deutlich unter -100°C liegen. Die Kern-Schale-Partikel haben ebenfalls einen Schalenanteil, der vorzugsweise eine T_{g} von mindestens 50°C.

Mit "Kern" ist hierin der innere Teil des Partikels gemeint. Der Kern kann das Zentrum des Kern-Schale-Partikels oder eine innere Hülle oder Domäne des Partikels darstellen. Mit "Hülle" oder "Schale" ist hierin der Teil außerhalb des Kerns gemeint und bildet üblicherweise die äußere Hülle, d.h. den äußersten Teil des Partikels. Das Schalenmaterial ist vorzugsweise auf den Kern gepfropft oder mit diesem quervernetzt. Der Kautschukkern kann 50 bis 95 Gew.-%, insbesondere 60 bis 90 Gew.-%, des Partikels ausmachen.

Der Kern des Partikels kann ein Polymer oder Copolymer eines konjugierten Diens, wie z.B. Butadien, sein oder ein Niederalkylacrylat, wie z.B. n-Butyl-, Ethyl-, Isobutyl- oder 2-Ethylhexylacrylat. Das Kernpolymer kann zusätzlich bis zu 20 Gew.-% von weiteren copolymerisierten einfach ungesättigten Monomeren, wie Styrol, Vinylacetat, Vinylchlorid, Methylmethacrylat und ähnlichen, enthalten. Das Kernpolymer ist optional quervernetzt. In bestimmten Ausführungsformen enthält es bis zu 5 Gew.-% eines copolymerisierten Pfropfmonomers, das zwei oder mehr ungesättigte Bindungen mit unterschiedliche Reaktivität enthält, wie beispielsweise Diallylmaleat, Monoallylfumarat, Allylmethacrylat und ähnliche, wobei mindestens eine der ungesättigten Bindungen nicht konjugiert ist.

Das Kernpolymer kann auch ein Silikonkautschuk sein. Diese Materialien haben oftmals Glasübergangstemperaturen von unter -100°C. Kern-Schale-Partikel, die solche Silikonkautschukkerne haben schließen solche ein, die kommerziell unter dem Handelsnamen Genioperl von Wacker Chemie (München, DE) erhältlich sind.

Das Schalenpolymer, das optional auf den Kern gepfropft oder mit diesem vernetzt ist, ist vorzugsweise ein Polymer von einem Niederalkylmethacrylat, wie Methlymethacrylat, Ethylmethacrylat oder t-Butylmethacrylat. Es können Homopolymere solcher Methacrylate verwendet werden. Des Weiteren können bis zu 40 Gew.-% des Schalenpolymers aus anderen Vinyl-Monomeren, wie Styrol, Vinylacetate, Vinylchlorid, Methylacrylat, Ethylacrylat, Butylacrylat und ähnlichen gebildet werden. Das Molekulargewicht des gepfropften Schalepolymers beträgt im Allgemeinen zwischen 20,000 und 500,000.

Die Kautschukpartikel haben üblicherweise durchschnittliche Partikelgrößen von etwa 0,03 bis etwa 2 Mikrometer oder von etwa 0,05 bis etwa 1 Mikrometer. In bestimmten Ausführungsformen der Erfindung haben die Kautschukteilchen einen durchschnittlichen Durchmesser von weniger als etwa 500 nm. In anderen Ausführungsformen beträgt die durchschnittliche Partikelgröße weniger als etwa 200 nm. Zum Beispiel können die Kern-Schale-Kautschuk-Teilchen einen mittleren Durchmesser im Bereich von etwa 25 bis etwa 200 nm oder von etwa 50 bis 150 nm haben.

Verfahren zur Herstellung von Kautschuk-Teilchen mit einer Kern-Schale-Struktur sind im Stand der Technik gut bekannt und werden zum Beispiel in US-Patenten Nr. 3,985,703, 4,180,529, 4,315,085, 4,419,496, 4,778,851, 5,223,586, 5,290,857, 5,534,594, 5,686,509, 5,789,482, 5,981,659, 6,111,015, 6,147,142 und 6,180,693, 6,331,580 und 2005/124,761 beschrieben.

Die Kern-Schale-Partikel können in dem Schale-Polymer reaktive Gruppen aufweisen, die mit einem Epoxidharz oder einem Epoxidharz-Härter reagieren können. So sind beispielsweise Glycidylgruppen geeignet. Besonders bevorzugte Kern-Schale-Partikel sind die, die in der europäischen Patentanmeldung EP 1 632 533 A1 beschrieben werden. Die darin beschriebenen Kern-Schale-Partikel schließen einen quervernetzten Kautschukkern, in den meisten Fällen ein quervernetztes Copolymer von Butadien, und eine Schale, die vorzugsweise ein Copolymer von Styrol, Methylmethacrylat, Glycidylmethacrylat und optional Acrylonitril ist.

In verschiedenen Ausführungsformen werden Kern-Schale-Partikel verwendet, wie sie auch in der WO 2007/025007 beschrieben werden.

Die Kautschukpartikel mit Kern-Schale-Struktur sind vorzugsweise in einem Polymer oder Epoxidharz dispergiert, wie ebenfalls in dem oben zitierten Dokument beschrieben. Bevorzugte Kern-Schale-Partikel schließen die ein, die von der Kaneka Corporation unter der Bezeichnung Kaneka Kane Ace erhältlich sind, einschließlich Kaneka Kane Ace 15 und der 120er Produkt-Reihe, einschließlich Kaneka Kane Ace MX 153, Kaneka Kane Ace MX 156, Kaneka Kane Ace MX 257 und Kaneka Kane Ace MX 120 Kern-Schale-Partikel Dispersionen und Mischungen davon. Diese Produkte enthalten die Kern-Schale-Kautschukpartikel vordispergiert in einem Epoxidharz, mit Konzentrationen von ungefähr 33 oder 25 %.

Die erfindungsgemäßen Harzzusammensetzungen enthalten die Kern-Schale-Partikel vorzugsweise in Gesamtmengen von 1 Gew.-% bis 30 Gew.-%, insbesondere 15 bis 25 Gew.-%, jeweils bezogen auf das Gesamtgewicht der Harzzusammensetzung und die Kern-Schale-Partikel als solche, d.h. ohne das eventuell vorhandene Dispersionsmedium.

Die erfindungsgemäßen Zusammensetzungen umfassen des Weiteren anorganische Partikel. Geeignete anorganische Partikel haben einen Teilchendurchmesser im Bereich von 20 bis 400 nm, insbesondere im Bereich von 20 bis 300 nm, noch bevorzugter im Bereich von 20 bis 250 nm.

Gemäß einigen Ausführungsformen handelt es sich bei den anorganischen Partikeln um anorganische Siliziumdioxid-Partikel. Geeignete anorganische Partikel sind beispielsweise kommerziell erhältlich unter dem Namen Nanopox von Evonik.

Die erfindungsgemäßen Harzzusammensetzungen enthalten die anorganischen Partikel vorzugsweise in Gesamtmengen von 1 Gew.-% bis 10 Gew.-%, insbesondere 4 Gew.-% bis 8 Gew.-%, jeweils bezogen auf das Gesamtgewicht der Harzzusammensetzung.

Gemäß einigen Ausführungsformen liegt die Menge an organischen Partikeln (A) und anorganischen Partikeln (B) in den erfindungsgemäßen Harzzusammensetzungen in Summe im Bereich von 1 bis 30 Gew.-%, vorzugsweise im Bereich von 15-25 Gew,-%, jeweils bezogen auf das Gesamtgewicht der Harzzusammensetzung.

Erfindungsgemäß umfassen die Harzzusammensetzungen des Weiteren mindestens eine Epoxidharz-Komponente. Eine geeignete Epoxidharz-Komponente umfasst dabei eine oder mehrere EpoxidVerbindungen, wie nachfolgend beschrieben.

Im Kontext der vorliegenden Erfindung kann ein Epoxidharz Epoxidgruppen-haltige Monomere, Präpolymere und Polymere sowie Gemische der vorgenannten umfassen und wird im Folgenden auch als Epoxid bzw. Epoxidgruppen-haltiges Harz bezeichnet. Geeignete Epoxidgruppen-haltige Harze sind insbesondere Harze mit 1 bis 10, bevorzugt 2 bis 10 Epoxidgruppen pro Molekül. "Epoxidgruppen", wie hierin verwendet, bezieht sich auf 1,2-Epoxidgruppen (Oxirane).

Die hierin verwendbaren Epoxidharze können variieren und schließen konventionelle und kommerziell erhältlich Epoxidharze, die jeweils individuell oder in Kombination von zwei oder mehr verschiedenen Epoxidharzen eingesetzt werden können, ein. Bei der Auswahl der Epoxidharze spielen nicht nur die Eigenschaften des Endprodukts, sondern auch die Eigenschaften des Epoxidharzes, wie zum Beispiel die Viskosität und andere Eigenschaften, die die Verarbeitbarkeit beeinflussen, eine Rolle.

Das Epoxid-Äquivalent der Polyepoxide kann zwischen 75 und 50000, vorzugsweise zwischen 170 und 5000, variieren. Die Polyepoxide können grundsätzlich gesättigte, ungesättigte, cyclische oder acyclische, aliphatische, cycloaliphatische, aromatische oder heterocyclische Polyepoxidverbindungen sein.

Gemäß einigen Ausführungsformen umfasst die mindestens eine Epoxidharz-Komponente ein cycloaliphatisches Epoxidharz.

Beispiele für geeignete cycloaliphatische Epoxide sind Verbindungen, die einen gesättigten Kohlenwasserstoffring mit einem an zwei benachbarte Kohlenstoffatome des Kohlenstoffrings gebundenen Epoxid-Sauerstoffatom aufweisen, wie in nachfolgender Formel dargestellt: 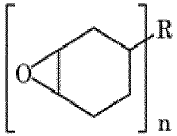 wobei R eine Verknüpfungsgruppe und n eine ganze Zahl von 2 bis 10, vorzugsweise von 2 bis 4 und noch bevorzugter von 2 bis 3 ist. Dabei handelt es sich um Di- oder Polyepoxide, wenn n 2 oder mehr ist. Derartige cycloaliphatische Epoxidharze können ein Epoxid-Äquivalentgewicht von ungefähr 95 bis 250, insbesondere von 100 bis 150 haben. Mischungen von mono-, di- und/oder Polyepoxiden können verwendet werden.

Weitere Beispiele für geeignete cycloaliphatische Epoxide sind insbesondere die Epoxide von cycloaliphatischen Estern von Dicarbonsäuren wie bis-(3,4-Epoxycyclohexylmethyl)oxalat, bis-(3,4-Epoxy-cyclohexylmethyl)adipat, bis-(3,4-Epoxy-6-Methylcyclohexylmethyl)adipat, bis-(3,4-Epoxycyclohexylmethyl)pimelat. Weitere geeignete Diepoxide von cycloaliphatischen Estern sind z.B. in der US-A-2750395 beschrieben.

Weitere geeignete cycloaliphatische Epoxide sind beispielsweise 3,4-Epoxycyclohexylmethyl-3,4-Epoxycyclohexancarboxylat, bis-(3,4-Epoxycyclohexyl)adipat, und 3,4-Epoxy-1-Methylcyclohexylmethyl-3,4-epoxy-1-methylcyclohexancarboxylat. Weitere geeignete cycloaliphatische Epoxide sind beispielsweise in der US-A-2890194 beschrieben.

Gemäß einigen Ausführungsformen umfasst die mindestens eine Epoxidharz-Komponente eine Epoxidverbindung ausgewählt aus der Gruppe bestehend aus bis-(3,4-Epoxycyclohexylmethyl)oxalat, bis-(3,4-Epoxy-cyclohexylmethyl)adipat, bis-(3,4-Epoxy-6-Methylcyclohexylmethyl)adipat, bis-(3,4-Epoxycyclohexylmethyl)pimelat, 3,4-Epoxycyclohexylmethyl-3,4-Epoxycyclohexancarboxylat, bis-(3,4-Epoxycyclohexyl)adipat, 3,4-Epoxy-1-Methylcyclohexylmethyl-3,4-epoxy-1-methylcyclohexan-carboxylat, und Mischungen davon.

Weitere, zur Verwendung in den erfindungsgemäßen Harzzusammensetzungen geeignete Polyepoxide schließen beispielsweise die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxyphenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin. Weitere geeignete Polyphenole als Basis für die Polyglycidylether sind die bekannten Kondensationsprodukte aus Phenol und Formaldehyd oder Acetaldehyd vom Typ der Novolakharze.

Weitere prinzipiell geeignete Polyepoxide sind die Polyglycidylether von Polyalkoholen oder Diaminen. Diese Polyglycidylether leiten sich von Polyalkoholen wie Ethylenglykol, Diethylenglykol, Triethylenglykol, 1,2-Propylenglykol, 1,4-Butylenglykol, Triethylenglykol, 1,5-Pentandiol, 1,6-Hexandiol oder Trimethylolpropan ab.

Weitere Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Weitere geeignete Epoxidharze sind im Stand der Technik bekannt und können beispielsweise Lee H. & Neville, K., Handbook of Epoxy Resins, McGraw-Hill Book Company, Neuauflage von 1982 entnommen werden.

Weitere Epoxide leiten sich von den Epoxidierungsprodukten olefinisch ungesättigter cycloaliphatischer Verbindungen oder von nativen Ölen und Fetten ab.

Je nach Anwendungszweck kann es bevorzugt sein, dass die Zusammensetzung zusätzlich ein flexibilisierend wirkendes Harz enthält. Hierbei kann es sich ebenfalls um ein Epoxidharz handeln. Als flexibilisierend wirkende Epoxyharze können die an sich bekannten Addukte aus Carboxyl-terminierten Butadienacrylnitrilcopolymeren (CTBN) und flüssigen Epoxidharzen auf der Basis des Diglycidylethers vom Bisphenol A eingesetzt werden. Konkrete Beispiele sind die Umsetzungsprodukte der Hycar CTBN 1300 X8, 1300 X13 oder 1300 X15 der Firma B. F. Goodrich mit flüssigen Epoxidharzen. Weiterhin lassen sich auch die Umsetzungsprodukte von aminoterminierten Polyalkylenglykolen (Jeffamine) mit einem Überschuss an flüssigen Polyepoxiden einsetzen. Grundsätzlich können auch Umsetzungsprodukte von Mercapto-funktionellen Prepolymeren oder flüssige Thiokol-Polymere mit einem Überschuss an Polyepoxiden als flexibilisierende Epoxidharze erfindungsgemäß eingesetzt werden. Ganz besonders bevorzugt sind jedoch die Umsetzungsprodukte von polymeren Fettsäuren, insbesondere der Dimerfettsäure mit Epichlorhydrin, Glycidol oder insbesondere Diglycidylether des Bisphenols A (DGBA).

Die erfindungsgemäßen Harzzusammensetzungen umfassen des Weiteren mindestens eine Härter-Komponente.

Gemäß einigen Ausführungsformen umfasst die mindestens eine Härter-Komponente mindestens einen Anhydrid-Härter.

Beispiele für geeignete Anhydrid-basierte Härter sind Norbornen-basierte Dicarbonsäureanhydride. Geeignete Norbornen-basierte Dicarbonsäureanhydride werden durch die nachfolgende Formel dargestellt: 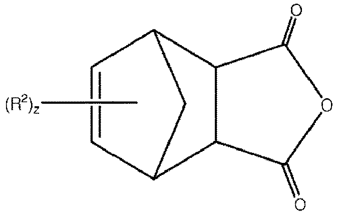 wobei jedes R unabhängig Hydrocarbyl, Halogen oder inert substituiertes Hydrocarbyl repräsentiert; z eine ganze Zahl von 0 bis 8, vorzugsweise eine ganze Zahl von 0 bis 2, insbesondere von 0 bis 1; und R², wenn vorhanden, eine Alkylgruppe, vorzugsweise eine Methylgruppe darstellt. Wie hierin verwendet bedeutet die Bezeichnung "inert substituiert", dass der Substituent die Fähigkeit der Anhydrid-Gruppe, mit dem Epoxidharz zu reagieren und dieses zu härten, nicht nachteilig beeinflusst. In Fällen, in denen z 1 oder mehr ist, ist vorzugsweise mindestens eine R²-Gruppe an das Kohlenstoffatom in Position 5 gebunden. In Norbornen-basierten Dicarbonsäureanhydride kann die Dicarbonsäureanhydrid-Gruppe in exo- oder endo-Konformation vorliegen. Im Kontext dieser Erfindung sind grundsätzlich beide Isomere sowie Mischungen beider Isomere geeignet. Bevorzugtes Beispiele einer wie hierin beschriebenen Norbornen-basierten Dicarbonsäureanhydrids sind Bicyclo[2.2.1]-5-hepten-2,3-dicarbonsäureanhydrid, d.h. ein Anhydrid der vorgenannten Struktur, wobei z 0 ist); Bicyclo[2.2.1]-methylhept-5-en-2,3-dicarbonsäureanhydrid, d.h. ein Anhydrid der vorgenannten Struktur, wobei R² Methyl ist und z 1 ist, wobei die Methylgruppe vorzugsweise an das Kohlenstoffatom in 5-Position gebunden ist. Gemäß einigen Ausführungsformen umfasst die mindestens eine Härter-Komponente der hierin beschriebenen Harzzusammensetzungen mindestens einen Anhydrid-Härter, wobei der mindestens eine Anhydrid-Härter ausgewählt ist aus Bicyclo[2.2.1]-5-hepten-2,3-dicarbonsäureanhydrid, Bicyclo[2.2.1]-methylhept-5-en-2,3-dicarbonsäureanhydrid und Mischungen davon. Andere geeignete Anhydrid-basierte Härter stellen gesättigte Norbornen-basierte Dicarbonsäureanhydride dar. Diese leiten sich aus den oben genannten Strukturen ab, wobei die Doppelbindung im Norbornen-Gerüst hydriert ist.

Weitere Anhydrid-Härter sind aliphatische Anhydride, wie beispielsweise Hexahydrophthalsäureanhydrid, Tetrahydrophthalsäureanhydrid, Methyltetrahydrophthalsäureanhydrid, Methylhexahydrophthalsäureanhydrid und Mischungen der vorgenannten; sowie aromatische Anhydride, wie beispielsweise Phthalsäureanhydrid, Trimellitsäureanhydrid und Mischungen davon. Insbesondere geeignete Anhydrid-Härter sind Hexahydrophthalsäureanhydrid, Methylhexahydrophthalsäureanhydrid und Mischungen daraus. Weitere geeignete Anhydrid-Härter sind Copolymere von Styrol und Maleinsäureanhydrid sowie anderen Anhydriden, welche mit Styrol copolymerisierbar sind.

Gemäß bevorzugten Ausführungsformen umfasst die mindestens eine Härter-Komponente der hierin beschriebenen Harzzusammensetzungen mindestens einen Anhydrid-Härter, wobei der mindestens eine Anhydrid-Härter ausgewählt ist aus Hexahydrophthalsäureanhydrid, Methylhexahydrophthalsäureanhydrid und Mischungen davon.

Als thermisch aktivierbare oder latente Härter können des Weiteren Guanidine, substituierte Guanidine, substituierte Harnstoffe, Melaminharze, Guanamin-Derivate, cyclische tertiäre Amine, aromatische Amine und/oder deren Mischungen eingesetzt werden. Dabei können die Härter stöchiometrisch mit in die Härtungsreaktion einbezogen sein. Sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoximethyl-ethoxymethylbenzoguanamin genannt. Für einkomponentige, hitzehärtende Formkörper ist das Auswahlkriterium die niedrige Löslichkeit dieser Stoffe bei Raumtemperatur in dem Harzsystem, so dass hier feste, feinvermahlene Härter den Vorzug haben. Insbesondere ist Dicyandiamid geeignet. Damit ist eine gute Lagerstabilität der hitzehärtbaren Formkörper gewährleistet.

Zusätzlich zu oder anstelle von den vorgenannten Härtern können katalytisch wirksame substituierte Harnstoffe eingesetzt werden. Dies sind insbesondere der p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden. Diese haben jedoch vielfach eine zu hohe Löslichkeit in dem Klebstoffsystem, so dass hier keine brauchbare Lagerstabilität des einkomponentigen Systems erreicht wird. Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C₁₋₁₂-Alkylimidazole oder N-Arylimidazole. Besonders bevorzugt ist der Einsatz einer Kombination aus Härter und Beschleuniger in Form von sog. beschleunigten Dicyandiamiden in feinvermahlener Form. Dadurch erübrigt sich der separate Zusatz von katalytisch wirksamen Beschleunigern zu dem Epoxid-Härtungssystem.

Die erfindungsgemäßen Zusammensetzungen können auch als zweikomponentige Zusammensetzungen formuliert werden, bei denen die beiden Reaktionskomponenten erst kurz vor der Applikation miteinander vermischt werden, wobei die Aushärtung dann bei Raumtemperatur oder mäßig erhöhter Temperatur stattfindet. Als zweite Reaktionskomponente können hierbei die für zweikomponentige Epoxyzusammensetzungen an sich bekannten Reaktionskomponenten eingesetzt werden, beispielsweise Di- oder Polyamine, aminoterminierte Polyalkylenglykole (z. B. Jeffamine, Amino-Poly-THF) oder Polyaminoamide. Weitere Reaktivpartner können mercaptofunktionelle Prepolymere sein, wie z.B. die flüssigen Thiokol-Polymere, ebenso können die erfindungsgemäßen Epoxyzusammensetzungen auch bevorzugt mit Carbonsäureanhydriden als zweiter Reaktionskomponente in 2K Formulierungen ausgehärtet werden.

Die vorliegende Erfindung betrifft des Weiteren ein Verfahren zur Herstellung einer gehärteten Zusammensetzung, umfassend die Schritte des (1) Bereitstellens einer Harzzusammensetzung, wie vorstehend beschrieben, und des (2) Härtens der Harzzusammensetzung, um auf diese Weise eine gehärtete Zusammensetzung zu erhalten.

Entsprechend gehärtete Zusammensetzungen weisen eine erhöhte mechanische Beständigkeit, insbesondere eine erhöhte Schlagzähigkeit auf, ohne die Glasübergangstemperatur herabzusetzen, so dass die erhaltenen Zusammensetzungen bei der Fertigung und ihrer zweckmäßigen Bestimmung erhöhten Temperaturen ausgesetzt werden können. Daher sind diese für die Herstellung von faserverstärkten Kunststoffformteilen, wie Automobilteilen, besonders geeignet.

"Bereitstellen", wie hierhin verwendet, bezieht sich auf das Mischen der Bestandteile der Harzzusammensetzung in beliebiger Reihenfolge. Es kann beispielsweise vorteilhaft sein, zunächst zwei oder mehr Bestandteile zusammenzugeben und gegebenenfalls zu einem heterogenen oder homogenen Gemisch zu mischen, bevor die restlichen Bestandteile hinzuzugeben werden. So kann beispielsweise zunächst die mindestens eine Epoxidharz-Komponente mit den organischen und/oder anorganischen Partikeln gemischt und anschließend, beispielsweise kurz vor dem Härten, die mindestens eine Härter-Komponente zugegeben und in die anderen bereits durchmischten Bestandteile eingemischt werden. Zwischen den verschiedenen Kombinations- und Mischschritten kann es vorteilhaft sein, das Reaktionsgemisch auf Raumtemperatur abzukühlen. In einer anderen Ausführungsform kann es zwischen den verschiedenen Kombinations- und Mischschritten vorteilhaft sein, das Reaktionsgemisch aufzuheizen, um die Löslichkeit zu verbessern.

Generell können die einzelnen Bestandteile der Harzzusammensetzung als solche oder als Lösung in einem Lösungsmittel, wie beispielsweise einem organischen Lösungsmittel oder einem Gemisch organischer Lösungsmittel, eingesetzt werden. Hierzu ist jedes bekannte und für den erfindungsgemäßen Zweck geeignete Lösungsmittel einsetzbar. So kann das Lösungsmittel beispielsweise ein hochsiedendes organisches Lösungsmittel sein. Das Lösungsmittel kann ausgewählt sein aus der Gruppe bestehend aus Petroleum, Benzen, Toluen, Xylen, Ethylbenzen und Mischungen davon.

Die hierin beschriebene Harzzusammensetzung kann mit weiteren im Stand der Technik bekannten Bestandteilen in Form einer Klebstoffzusammensetzung oder eines Injektionsharzes kombiniert werden.

Derartige Klebstoffzusammensetzungen bzw. Injektionsharze können eine Vielzahl anderer Komponenten enthalten, von denen alle dem Fachmann auf dem Gebiet bekannt sind, einschließlich, aber nicht beschränkt auf häufig verwendete Hilfsstoffe und Additive, wie zum Beispiel Füllstoffe, Weichmacher, reaktive und/oder nichtreaktive Verdünnungsmittel, Fließmittel, Kopplungsmittel (z.B. Silane), Trennmittel, Haftvermittler, Netzmittel, Haftmittel, Flammschutzmittel, Netzmittel, Thixotropiermittel und/oder rheologische Hilfsstoffe (z.B. pyrogene Kieselsäure), Alterungs- und/oder Korrosionsinhibitoren, Stabilisatoren und/oder Farbstoffe. Je nach Anforderung an den Klebstoff bzw. das Injektionsharz und seine Anwendung und im Hinblick auf die Produktion, Flexibilität, Festigkeit und Verklebung mit Substraten, werden die Hilfs- und Zusatzstoffe in unterschiedlichen Mengen in die Zusammensetzung eingearbeitet.

In bevorzugten Ausführungsformen enthalten die Zusammensetzungen der Erfindung keine Weichmacher, bzw. weniger als 0,1 Gew.-% Weichmacher, da diese dazu neigen, die T_{g} zu senken.

In verschiedenen Ausführungsformen der Erfindung, wird die Harzzusammensetzung je nach gewünschter Verwendung auf ein Substrat aufgetragen, beispielsweise bei Verwendung als Klebstoff, oder in ein Formwerkzeug eingefüllt, bei der Verwendung als Formmasse zur Herstellung von Kunststoffteilen. In bevorzugten Ausführungsformen ist das Verfahren ein Spritzpress(RTM)-Verfahren und die Harzzusammensetzung ein reaktives Injektionsharz. "Reaktiv", wie in diesem Zusammenhang verwendet, bezieht sich auf die Tatsache, dass das Injektionsharz chemisch vernetzbar ist. Bei dem RTM-Verfahren kann das Bereitstellen der Harzzusammensetzung, d.h. Schritt (1) des beschriebenen Verfahrens, das Einfüllen, insbesondere Einspritzen (Injektion), des Injektionsharzes in ein Formwerkzeug umfassen. Bei der Herstellung von faserverstärkten Kunststoffteilen, wofür die beschriebenen Verfahren und Reaktionsgemische besonders geeignet sind, können vor dem Einspritzen in das Formwerkzeug in dieses Fasern oder Faserhalbzeuge (Prewovens/Preform) eingelegt werden. Als Fasern und/oder Faserhalbzeuge können die im Stand der Technik für diese Anwendung bekannten Materialien, insbesondere Kohlenstofffasern verwendet werden.

In verschiedenen Ausführungsformen sind derartige Harzzusammensetzungen Klebstoffzusammensetzungen oder Injektionsharze. Die Injektionsharze sind vorzugsweise pumpbar und insbesondere für das Spritzpressen (RTM-Verfahren) geeignet. In verschiedenen Ausführungsformen hat das Reaktionsgemisch daher bei einer Temperatur von 100°C, d.h. einer typischen Infusionstemperatur, eine Viskosität von <100 mPas.

Die Erfindung betrifft in einer Ausführungsform daher auch die mittels der erfindungsgemäßen Harzsysteme im RTM-Verfahren erhältlichen Formteile. Die RTM-Verfahren, in denen die beschriebenen Harzsysteme eingesetzt werden können, sind als solche im Stand der Technik bekannt und können von dem Fachmann ohne Weiteres derart angepasst werden, dass das erfindungsgemäße Reaktionsgemisch eingesetzt werden kann.

Die Öffnungszeiten der Harzzusammensetzungen, wie hierin beschrieben, sind vorzugsweise größer als 90 Sekunden und liegen besonders bevorzugt im Bereich von 2 bis 5 Minuten, insbesondere bei ungefähr 3 Minuten. "Ungefähr" oder "ca.", wie hierin im Zusammenhang mit einem Zahlenwert verwendet, bedeutet der Zahlenwert ±10%.

Je nach Art der eingesetzten Epoxide und Härter und der Verwendung der ausgehärteten Zusammensetzung kann die Harzzusammensetzung in Schritt (2) des erfindungsgemäßen Verfahrens bei unterschiedlichen Reaktionstemperaturen gehärtet werden. So kann die Härtungstemperatur zwischen 70°C und 280°C legen.

Generell kann die Härtung bei erhöhter Temperatur, d.h. >25°C, erfolgen. Vorzugsweise werden die Harze zwischen 80°C und 280°C und bevorzugt zwischen 100°C und 240°C gehärtet. Die Dauer der Härtung hängt ebenfalls von den zu härtenden Harzen und der Katalysator-Zusammensetzung ab und kann zwischen 0,01 Stunden bis 10 Stunden liegen. Vorzugsweise dauert der Härtungszyklus wenige Minuten, d.h. insbesondere 1 bis 15 Minuten. Die Härtung kann ein- oder auch mehrstufig erfolgen.

In einigen Ausführungsformen wird die hierin beschriebene Harzzusammensetzung in einem einstufigen Verfahren bei einer Temperatur zwischen 100 °C und 240 °C, vorzugsweise zwischen 160 °C und 240 °C und bevorzugt zwischen 180 °C und 240 °C für 0,01 Stunden bis 10 Stunden, vorzugsweise für 0,1 Stunden bis 5 Stunden bevorzugt für 1 Stunde gehärtet.

In alternativen Ausführungsformen kann eine wie hierin beschriebene Harzzusammensetzung in einem mehrstufigen Verfahren gehärtet werden. Ein solches mehrstufiges Verfahren beinhaltet einen ersten Schritt des Vorhärtens, wobei die Harzzusammensetzung bei einer Temperatur zwischen 110 °C und 200 °C, vorzugsweise 130 °C und 190 °C und bevorzugt bei 180 °C für 0,1 Stunden bis 3 Stunden, vorzugsweise für 0,5 Stunden bis 2 Stunden, bevorzugt für 1 Stunde vorgehärtet und anschließend, in einem zweiten Schritt nachgehärtet wird. Dieser zweite Schritt des Nachhärtens kann dabei eine oder mehrere Unterschritte umfassen, sodass die vorgehärtete Harzzusammensetzung mindestens einmal, vorzugsweise mindestens zweimal und bevorzugt mindestens dreimal jeweils bei einer Temperatur zwischen 110 °C und 260 °C, vorzugsweise 130 °C und 190 °C und bevorzugt bei 180 °C für jeweils 0,1 Stunden bis 3 Stunden, vorzugsweise für 0,5 Stunden bis 2 Stunden, bevorzugt für 1 Stunde nachgehärtet wird. Beispielsweise kann ein solcher zweiter Härtungsschritt das Nachhärten der vorgehärteten Harzzusammensetzung bei einer Temperatur zwischen 130 °C und 230 °C, vorzugsweise 180 °C und 220 °C und bevorzugt bei 200 °C für 0,1 Stunden bis 3 Stunden, vorzugsweise für 0,5 Stunden bis 2 Stunden, bevorzugt für 1 Stunde; anschließend bei einer Temperatur zwischen 150 °C und 250 °C, vorzugsweise 190 °C und 230 °C und bevorzugt bei 220 °C für 0,1 Stunden bis 3 Stunden, vorzugsweise für 0,5 Stunden bis 2 Stunden, bevorzugt für 1 Stunde; und anschließend bei einer Temperatur zwischen 170 °C und 260 °C, vorzugsweise 200 °C und 250 °C und bevorzugt bei 240 °C für 0,1 Stunden bis 3 Stunden, vorzugsweise für 0,5 Stunden bis 2 Stunden, bevorzugt für 1 Stunde umfassen.

Die wie hierin beschrieben gehärteten Harze haben vorzugsweise einen kritischen Spannungsintensitätsfaktor K1c von ≥0,8, vorzugsweise von ≥0,9, noch bevorzugter von ≥0,95 und am bevorzugtesten von ≥1,0. Die Glasübergangstemperatur der ausgehärteten Harze liegt, in verschiedenen Ausführungsformen, im Bereich von ≥ 250 °C, insbesondere ≥ 255 °C, typischerweise im Bereich bis 300°C. Der Elastizitätsmodul der ausgehärteten Harze liegt vorzugsweise bei mindestens 2000 N/mm², vorzugsweise mindestens 2100 N/mm², typischerweise im Bereich von 2200 bis 5000 N/mm².

Des Weiteren betrifft die vorliegende Erfindung die gehärtete Zusammensetzung, die nach dem hierin beschriebenen Verfahren erhältlich ist. Diese kann, abhängig von dem Verfahren, als Formteil, insbesondere als faserverstärktes Kunststoffformteil vorliegen. Derartige Formteile werden vorzugsweise im Automobilbau oder Aerospace eingesetzt.

So eignen sich die gehärteten Zusammensetzungen besonders als Matrixharz für Faserverbundwerkstoffe. Dabei können diese in verschiedenen Anwendungsverfahren eingesetzt werden, beispielsweise im Resin-Transfer-Moulding-Verfahren (RTM-Verfahren) oder im Infusionsverfahren.

Als Faserbestandteile der Faserverbundwerkstoffe sind bekannte hochfeste Faserwerkstoffe geeignet. Diese können beispielsweise aus Glasfasern; synthetischen Fasern, wie Polyesterfasern, Polyethylenfasern, Polypropylenfasern, Polyamidfasern, Polyimidfasern oder Aramidfasern; Kohlenstofffasern; Borfasern; oxidischen oder nicht oxidischen Keramikfasern, wie Aluminiumoxid/Siliciumdioxidfasern, Siliciumcarbidfasern; Metallfasern, beispielsweise aus Stahl oder Aluminium; oder aus Naturfasern, wie Flachs, Hanf oder Jute bestehen. Diese Fasern können in Form von Matten, Geweben, Gewirken, Gelegen, Vliesen oder Rovings eingebracht werden. Es können auch zwei oder mehr dieser Fasermaterialien als Gemisch verwendet werden. Es können Kurzschnittfasern ausgewählt werden, bevorzugt werden jedoch synthetische Langfasern eingesetzt, insbesondere Gewebe und Gelege. Solche hochfesten Fasern, Gelege, Gewebe und Rovings sind dem Fachmann bekannt.

Insbesondere soll der Faserverbundwerkstoff Fasern in einem Volumenanteil von mehr als 40 Vol.-%, bevorzugt mehr als 50 Vol.-%, insbesondere bevorzugt zwischen 50 und 70 Vol.-% bezogen auf den gesamten Faserverbundwerkstoff enthalten, um besonders gute mechanische Eigenschaften zu erzielen. Im Falle von Kohlefasern wird der Volumenanteil gemäß der Norm DIN EN 2564:1998-08 bestimmt, im Falle von Glasfasern gemäß der Norm DIN EN ISO 1172:1998-12.

Ein solcher Faserverbundwerkstoff eignet sich insbesondere als Automobilbauteil. Solche Faserverbundwerkstoffe weisen gegenüber Stahl mehrere Vorteile auf, so sind sie leichter, zeichnen sich durch eine verbesserte Crash-Resistenz aus und sind außerdem langlebiger.

Es ist im Übrigen selbstverständlich, dass alle Ausführungsformen, die oben im Zusammenhang mit den erfindungsgemäßen Verfahren offenbart wurden, auch genauso in den beschriebenen Harzsystemen und gehärteten Zusammensetzungen anwendbar sind und umgekehrt.

### Beispiele

### Beispielformulierung 1

### Epoxidharz-Komponente:

97,7 g Cycloaliphatisches Epoxid mit 30 % organischen Kern-Schale-Struktur Partikeln)
4,1 g organische Kern-Schale-Struktur-Partikel)
42,5 g Cycloaliphatisches Epoxid mit 40 % SiO₂-Partikeln
3,0 g mehrfunktioneller Fettsäureester (Trennmittel)

### Härter-Komponente:

132,0 g Mischung aus Bicyclo[2.2.1]-5-hepten-2,3-dicarbonsäureanhydrid und Bicyclo[2.2.1]-methylhept-5-en-2,3-dicarbonsäureanhydrid
2,0 g 1-Methylimidazol

Die Epoxidharz-Komponente und die Härter-Komponente wurden homogenisiert und anschließend in eine Stahlform gegossen. Die Vorhärtung erfolgte bei 130 °C über einen Zeitraum von 30 Minuten. Im Anschluss wurde die Mischung für eine Stunde bei 180 °C, für eine Stunde bei 200 °C, für eine Stunde bei 220 °C und schließlich für eine Stunde bei 240 °C nachgehärtet, um eine vollständige Vernetzung zu gewährleisten. Auf diese Weise wurden ca. 4 mm dicke Polymerplatten mit einer Fläche von 20 cm x 20 cm hergestellt.

Die Gesamtmenge an organischen Partikeln betrug ca. 12 %, die an anorganischen Partikeln ca. 6 %. Die physikalischen Eigenschaften der so hergestellten Platte sind in nachfolgender Tabelle übersichtlich zusammengestellt.

**Tabelle 1: physikalische Eigenschaften Beispielzusammensetzung 1**

| | |
|---|---|
| Biegemodul [MPa] | 2159 |
| Biegefestigkeit [MPa] | 96 |
| K1c [MPa*m1/2] | 1,0 |
| Tg DMA tan delta [°C] | 280 |
| Tg DMA E' onset [°C) | 255 |

### Beispielformulierung 2

### Epoxidharz-Komponente:

81,6 g Cycloaliphatisches Epoxid mit 30 % Kern-Schale-Struktur Partikeln
3,4 g Kern-Schale-Struktur Partikel
60,0 g Cycloaliphatisches Epoxid mit 40 % SiO₂ Partikeln
3,0 g mehrfunktioneller Fettsäureester (Trennmittel)

### Härter-Komponente:

132,0 g Mischung aus Bicyclo[2.2.1]-5-hepten-2,3-dicarbonsäureanhydrid und Bicyclo[2.2.1]-methylhept-5-en-2,3-dicarbonsäureanhydrid
2,0 g 1-Methylimidazol

Die Epoxidharz-Komponente und die Härter-Komponente wurden homogenisiert und anschließend in eine Stahlform gegossen. Die Vorhärtung erfolgte bei 130 °C über einen Zeitraum von 30 Minuten. Im Anschluss wurde die Mischung für eine Stunde bei 180 °C, für eine Stunde bei 200 °C, für eine Stunde bei 220 °C und schließlich für eine Stunde bei 240 °C nachgehärtet, um eine vollständige Vernetzung zu gewährleisten. Auf diese Weise wurden ca. 4 mm dicke Polymerplatten mit einer Fläche von 20 cm x 20 cm hergestellt.

Die Gesamtmenge an organischen Partikeln betrug ca. 10 %, die an anorganischen Partikeln ca. 8 %. Die physikalischen Eigenschaften der so hergestellten Platte sind in nachfolgender Tabelle übersichtlich zusammengestellt.

**Tabelle 2: physikalische Eigenschaften Beispielzusammensetzung 2**

| | |
|---|---|
| Biegemodul [MPa] | 2400 |
| Biegefestigkeit [MPa] | 96 |
| K1c [MPa*m1/2] | 0,9 |
| Tg DMA tan delta [°C] | 275 |
| Tg DMA E' onset [°C) | 250 |

### Vergleichsbeispiel

### Epoxidharz-Komponente:

137,0 g Cycloaliphatisches Epoxid mit 30 % Kern-Schale-Struktur Partikeln
3,0 g mehrfunktioneller Fettsäureester (Trennmittel)

### Härter-Komponente:

137,0 g Mischung aus Bicyclo[2.2.1]-5-hepten-2,3-dicarbonsäureanhydrid und Bicyclo[2.2.1]-methylhept-5-en-2,3-dicarbonsäureanhydrid
2,0 g 1-Methylimidazol

Die Epoxidharz-Komponente und die Härter-Komponente wurden homogenisiert und anschließend in eine Stahlform gegossen. Die Vorhärtung erfolgte bei 130 °C über einen Zeitraum von 30 Minuten. Im Anschluss wurde die Mischung für eine Stunde bei 180 °C, für eine Stunde bei 200 °C, für eine Stunde bei 220 °C und schließlich für eine Stunde bei 240 °C nachgehärtet, um eine vollständige Vernetzung zu gewährleisten. Auf diese Weise wurden ca. 4 mm dicke Polymerplatten mit einer Fläche von 20 cm x 20 cm hergestellt.

Die Gesamtmenge an organischen Partikeln betrug ca. 15 %. Die physikalischen Eigenschaften der so hergestellten Platte sind in nachfolgender Tabelle übersichtlich zusammengestellt.

**Tabelle 3: physikalische Eigenschaften der Vergleichsbeispielzusammensetzung**

| | |
|---|---|
| Biegemodul [MPa] | 2182 |
| Biegefestigkeit [MPa] | 79 |
| K1c [MPa*m1/2] | 0,7 |
| Tg DMA tan delta [°C] | 281 |
| Tg DMA E' onset [°C) | 252 |

Der direkte Vergleich der beiden beispielhaften Formulierungen 1 und 2 gemäß der vorliegenden Erfindung mit der Formulierung des Vergleichsbeispiels zeigt, dass eine Kombination aus organischen Kern-Schale-Strukturpartikeln und anorganischen Partikeln in cycloaliphatischen Epoxidharzzusammensetzungen eine Erhöhung des K1c Wertes zur Folge hat, ohne die Glasübergangstemperatur der gehärteten Zusammensetzung herabzusetzen.

## Patentansprüche

1. Harzzusammensetzung umfassend mindestens eine Epoxidharz-Komponente und mindestens eine Härter-Komponente, **dadurch gekennzeichnet, dass** die Harzzusammensetzung, bezogen auf deren Gesamtgewicht,
(A) 1-30 Gew.-% Partikel mit Kern-Schale-Struktur und
(B) 1-10 Gew.-% anorganische Partikel enthält.

2. Die Harzzusammensetzung gemäß Anspruch 1, **dadurch gekennzeichnet, dass** die mindestens eine Epoxidharz-Komponente ein cycloaliphatisches Epoxidharz umfasst.

3. Die Harzzusammensetzung gemäß Anspruch 1 oder 2, **dadurch gekennzeichnet, dass**
(a) die Menge an Partikeln (A) und Partikeln (B) in Summe im Bereich von 1 bis 30 Gew.-%, vorzugsweise im Bereich von 15-25 Gew,-%, jeweils bezogen auf das Gesamtgewicht der Harzzusammensetzung, liegt; und/oder
(b) die Menge an anorganischen Partikeln (B) im Bereich von 4-8 Gew.-% liegt; und/oder
(c) die Partikel (A) und die Partikel (B) in der Epoxidharz-Komponente enthalten sind.

4. Die Harzzusammensetzung gemäß einem der Ansprüche 1 bis 3, **dadurch gekennzeichnet, dass** die mindestens eine Epoxidharz-Komponente eine Epoxidverbindung ausgewählt aus der Gruppe bestehend aus bis-(3,4-Epoxycyclohexylmethyl)oxalat, bis-(3,4-Epoxycyclohexylmethyl)adipat, bis-(3,4-Epoxy-6-Methylcyclohexylmethyl)adipat, bis-(3,4-Epoxycyclohexylmethyl)pimelat, 3,4-Epoxycyclohexylmethyl-3,4-Epoxycyclohexancarboxylat, bis-(3,4-Epoxycyclohexyl)adipat, 3,4-Epoxy-1-Methylcyclohexylmethyl-3,4-epoxy-1-methylcyclohexancarboxylat, und Mischungen davon ist.

5. Die Harzzusammensetzung gemäß einem der Ansprüche 1 bis 4, **dadurch gekennzeichnet, dass** die mindestens eine Härter-Komponente mindestens einen Anhydrid-Härter umfasst.

6. Die Harzzusammensetzung gemäß Anspruch 5, **dadurch gekennzeichnet, dass** der mindestens eine Anhydrid-Härter ausgewählt ist aus Bicyclo[2.2.1]-5-hepten-2,3-dicarbonsäureanhydrid, Bicyclo[2.2.1]-methylhept-5-en-2,3-dicarbonsäureanhydrid und Mischungen davon.

7. Verfahren zur Herstellung einer gehärteten Zusammensetzung, umfassend die Schritte des
(1) Bereitstellens einer Harzzusammensetzung gemäß einem der Ansprüche 1 bis 6; und
(2) Härtens der Harzzusammensetzung, um eine gehärtete Zusammensetzung zu erhalten.

8. Das Verfahren gemäß Anspruch 7, **dadurch gekennzeichnet, dass** das Verfahren ein Spritzpress(RTM)-Verfahren und die Harzzusammensetzung ein reaktives Injektionsharz ist.

9. Das Verfahren gemäß einem der Ansprüche 7 oder 8, **dadurch gekennzeichnet, dass** Schritt (1) das Einspritzen der Harzzusammensetzung in ein Formwerkzeug, in das Fasern oder Faserhalbzeuge (Prewovens/Preform) eingelegt sind, umfasst.

10. Das Verfahren gemäß einem der Ansprüche 7 bis 9, **dadurch gekennzeichnet, dass**
(a) die Harzzusammensetzung in Schritt (2) bei einer Temperatur zwischen 100 °C und 240 °C, vorzugsweise zwischen 160 °C und 240 °C und bevorzugt zwischen 180 °C und 240 °C für 0,01 Stunden bis 10 Stunden, vorzugsweise für 0,1 Stunden bis 5 Stunden bevorzugt für 1 Stunde gehärtet wird; oder
(b) die Harzzusammensetzung in Schritt (2) zunächst bei einer Temperatur zwischen 70 °C und 150 °C, vorzugsweise 100 °C und 140 °C und bevorzugt bei 130 °C für 0,1 Stunden bis 3 Stunden, vorzugsweise für 0,5 Stunden bis 2 Stunden, bevorzugt für 0,5 Stunden vorgehärtet und anschließend mindestens einmal, vorzugsweise mindestens zweimal und bevorzugt mindestens dreimal jeweils bei einer Temperatur zwischen 110 °C und 260 °C, vorzugsweise 130 °C und 190 °C und bevorzugt bei 180 °C für jeweils 0,1 Stunden bis 3 Stunden, vorzugsweise für 0,5 Stunden bis 2 Stunden, bevorzugt für 1 Stunde nachgehärtet wird.

11. Gehärtete Zusammensetzung erhältlich nach einem Verfahren der Ansprüche 7 bis 10.

12. Die gehärtete Zusammensetzung gemäß Anspruch 11, **dadurch gekennzeichnet, dass** der K1c Wert der gehärteten Zusammensetzung mindestens 0,8 beträgt.

13. Die gehärtete Zusammensetzung gemäß Anspruch 11 oder 12, **dadurch gekennzeichnet, dass** die gehärtete Zusammensetzung eine Glasübergangstemperatur T_{g} ≥ 250 °C aufweist.

14. Gehärtete Zusammensetzung gemäß einem der Ansprüche 11 bis 13, **dadurch gekennzeichnet, dass** die gehärtete Zusammensetzung ein Formteil, insbesondere ein faserverstärktes Formteil ist.
